# FASCICULE DE BREVET EUROPEEN

(11) **EP 2 064 559 B1**
(45) Date de publication et mention de la délivrance du brevet: **06.03.2013**
(21) Numéro de dépôt: 07803524.3
(22) Date de dépôt: 17.09.2007
(51) Int. Cl.: G01P 15/097, G01P 15/10

(54) **ACCELEROMETRE A POUTRE RESONANTE AVEC BRAS DE LEVIER ARTICULE EN ROTATION**
RESONANZSTRAHLBESCHLEUNIGUNGSMESSER MIT ROTIERENDEM ARTIKULIERTEM HEBELARM
RESONANT-BEAM ACCELEROMETER WITH ROTATING ARTICULATED LEVER ARM

(30) Priorité: 19.09.2006 FR 0608186
(43) Date de publication de la demande: 03.06.2009
(73) Titulaire: Commissariat à l'Énergie Atomique et aux Énergies Alternatives, 75015 Paris (FR)
(72) Inventeur: HENTZ, Sébastien, 38000 Grenoble (FR); NGUYEN, Valérie, 38760 Varces (FR); ROBERT, Philippe, 38100 Grenoble (FR)
(74) Mandataire: Guérin, Michel
(86) Numéro de dépôt international: PCT/EP2007/059763
(87) Numéro de publication internationale: WO 2008/034788

(56) Documents cités:
- EP-A1- 0 331 557
- FR-A1- 2 821 433
- FR-A1- 2 848 298

## Description

L'invention concerne les accéléromètres qui sont micro-usinés dans une plaque de matériau monolithique selon des technologies de fabrication collective semblables à celles qui sont utilisées dans la fabrication des circuits intégrés électroniques.

Ces accéléromètres ont des applications multiples, notamment dans les domaines où on cherche à obtenir à la fois un encombrement minimal et un faible coût de production. Un domaine d'application privilégié est le domaine de la navigation automobile ou aérienne, dans lesquels ces accéléromètres permettent de déterminer, par intégration des signaux qu'ils fournissent, une vitesse puis une trajectoire.

On attend d'un accéléromètre un certain nombre de caractéristiques, et principalement un faible encombrement, une bonne sensibilité à une accélération dans une direction bien identifiée qu'on appelle "axe sensible", une sensibilité aussi faible que possible selon les autres axes, une bonne linéarité, une bonne précision de mesure, une bonne résistance mécanique, ainsi qu'un faible coût.

Les technologies de fabrication collective utilisées dans la microélectronique se prêtent particulièrement à l'obtention d'un faible coût de fabrication et le coût est alors directement lié à la taille du composant micro-usiné. Selon l'application envisagée pour l'accéléromètre, on essayera d'optimiser les différentes caractéristiques ci-dessus et on fera les compromis nécessaires, par exemple un compromis entre une petite taille et une bonne sensibilité.

Un accéléromètre micro-usiné comprend en général une masse sismique mobile (ou masse d'épreuve, "proof mass" en anglais), reliée au substrat dans laquelle elle a été usinée par une liaison élastique. Une poutre résonante (ou plusieurs) est fixée entre la masse et le substrat fixe et subit directement ou indirectement, éventuellement même avec une amplification mécanique, les efforts liés au déplacement de la masse sismique lors d'une accélération. La poutre est excitée en vibration (par exemple par l'effet de forces électrostatiques entre des zones conductrices en vis-à-vis) par un circuit électrique d'excitation ; le circuit d'excitation est un circuit oscillant dont la poutre, électriquement conductrice, fait partie. La poutre se comporte comme une armature mobile de condensateur subissant des efforts électrostatiques et engendrant des variations de capacité. La fréquence d'oscillation électrique qui s'impose dans un tel circuit est une fréquence de résonance mécanique de la poutre. Cette fréquence dépend de la tension (ou la compression) de la poutre dans le sens longitudinal ; cette tension résulte de l'effort exercé par la masse sismique, donc de l'accélération subie par la masse. La mesure de la fréquence d'oscillation électrique permet de déterminer l'accélération subie par la masse.

La fréquence d'oscillation f est de la forme f=f₀(1+P/Pc)^{1/2}, où f₀ est une fréquence d'oscillation naturelle en l'absence de contrainte de tension ou compression, P est la tension exercée sur la poutre (signée, c'est-à-dire une tension ou une compression selon que P est positif ou négatif), Pc est une valeur fixe liée à la géométrie de la poutre et au matériau qui la constitue.

Dans l'art antérieur on a proposé de multiples constitutions d'accéléromètres. On citera notamment les suivants :
Accéléromètres pendulaires dans lesquels la masse se déplace en rotation autour d'une charnière qui la relie au substrat.

Ces accéléromètres ne sont en général pas performants pour de faibles accélérations, en particulier s'il y a plusieurs poutres résonantes, à cause des couplages mécaniques qui existent entre les poutres. De plus, les rotations exercées lors du déplacement de la masse font que les efforts exercés par la masse sur la poutre résonante ne sont pas exactement dans l'axe de la poutre ; il en résulte des composantes d'effort parasites et une mauvaise utilisation de l'énergie de déplacement appliquée par la masse à la poutre : une partie de l'énergie sert à déformer la poutre en flexion, ce qui n'est pas utile à la mesure ; la linéarité et la sensibilité ne sont pas optimales.

Certaines structures placent le résonateur de telle manière que l'axe de la poutre soit parallèle à l'axe sensible et perpendiculaire à la ligne qui relie le point de rotation de la masse et le point d'application de l'effort sur la poutre. Mais il en résulte alors souvent une disposition défavorable du point de vue de la compacité et il y a des difficultés de réalisation industrielle.

De tels accéléromètres sont décrits par exemple dans les publications suivantes :
EP 0 331 557 B1, US 6 941 809 B2, FR 2 784 752 A1, WO 98/53328 A1,
Young Ho Seo et Young-Ho Cho : Design, Fabrication, Static Test and Uncertainty Analysis of a Resonant Microaccelerometer, dans Sensors and Materials, Vol. 14, N°2 (2002) pp 91-108,
O. Le Traon et autres : The Via Vibrating Beam Accelerometer : A New Quartz Micromachined Sensor, dans 1999 Joint Meeting EFTF-IEEE IFCS, pp 1041-1044,
M. Aikele et autres : resonant accelerometer with self-test, dans Sensors and Actuators A 92 (2001) pp 161-167
Peter H. Lafond : Modeling For Error Reduction in Vibrating Beam Aceelerometers, dans IEEE 1992 Position Location and Navigation Symposium, pp 126-132,
Roessig et autres : Surface Micromachined resonant Accelerometer, dans Transducers 97 IEEE, pp 859-862,

Afin de pallier les défauts de cinématique des structures pendulaires, on a aussi proposé d'autres structures dans lesquelles la masse sismique se déplace parallèlement à elle-même (donc en translation et non en rotation autour d'une charnière). Le résonateur est alors le plus souvent relié directement à la masse, ce qui empêche d'obtenir un effet d'amplification de l'effort dû à l'accélération. La sensibilité est donc limitée. Ces structures sont en général encombrantes, surtout lorsqu'on désire fonctionner en différentiel avec deux poutres résonantes (une poutre subissant un effort de traction pendant que l'autre subit un effort de compression).

D'autres structures, avec déplacement de la masse en translation, ont été proposées, avec une structure d'amplification interposée entre la masse et la poutre résonante ; cette structure d'amplification comprend un levier d'amplification d'effort. L'effort exercé par la masse sur le levier en un point est transmis avec un coefficient d'amplification en un autre point du levier. Ces structures sont complexes : elles nécessitent encore une pièce intermédiaire et une articulation entre le levier et la poutre résonante. Elles sont encombrantes, tout particulièrement si elles doivent fonctionner de manière différentielle avec deux poutres résonantes travaillant l'une en traction et l'autre en compression lors d'un déplacement de la masse sismique.

De tels accéléromètres pourvus de moyens d'amplification mécanique des efforts sont décrits par exemple dans les publications suivantes :
FR 2 848 298 A1 ; cette structure présente un coefficient d'amplification d'effort lié à la valeur de la tangente d'un angle qu'il est difficile de maîtriser précisément dans une fabrication industrielle.
US 5 969 249 et article de Ashwin A. Seshia et autres : A Vacuum Packaged Surface Micromachined Resonant Accelerometer, dans Journal of Microelectromechanical systems, vol. 11 N°6 decembre 2002 ; cette structure présente un effet de levier d'amplification mais elle est particulièrement encombrante et l'articulation des leviers au substrat est nécessairement assez raide parce qu'il n'y a pas de place pour mettre une articulation plus souple sans augmenter encore l'encombrement.

Les accéléromètres qu'on va considérer ici sont les accéléromètres à résonateur ayant une masse sismique pouvant se déplacer principalement en translation selon un axe sensible situé dans le plan du substrat dans lequel la masse est usinée (par opposition à d'autres accéléromètres dans lesquels l'axe sensible est perpendiculaire au plan du substrat). On considérera dans la suite que la géométrie de l'accéléromètre est définie dans un repère orthogonal Ox, Oy, Oz propre à l'accéléromètre ; l'axe Oy, dans le plan du substrat, est l'axe sensible ; l'axe Ox, également dans le plan du substrat, est perpendiculaire à Oy ; l'axe Oz est perpendiculaire au plan.

Dans ces accéléromètres, la masse sismique est suspendue à des points d'ancrage fixes par rapport au substrat par l'intermédiaire de liaisons élastiques ayant une faible raideur dans la direction de l'axe sensible Oy et une forte raideur selon les deux autres axes Ox et Oz. Elle ne peut donc se déplacer pratiquement que dans l'axe Oy. Son déplacement est limité, dans la gamme des accélérations à mesurer, par la force de rappel exercée par les liaisons élastiques.

La masse sismique est reliée à travers une structure d'amplification d'effort à un résonateur sur lequel elle exerce une tension ou une compression. Le résonateur est en général une simple poutre résonante ou un ensemble de deux poutres résonantes parallèles couplées mécaniquement (résonateur de type diapason). Il est également micro-usiné dans le substrat et possède en général une extrémité ancrée au substrat ; la liaison mécanique entre masse et poutre est telle que les mouvements de la masse selon Oy exercent sur la poutre une tension ou une compression dans le sens longitudinal de la poutre. Le résonateur est associé à des moyens d'excitation d'une vibration, et à des moyens de mesure de la fréquence de vibration qui en résulte.

Pour aboutir à un meilleur compromis sur la compacité, la sensibilité et les autres qualités souhaitées pour un accéléromètre, l'invention propose une nouvelle structure d'accéléromètre.

Selon l'invention, on propose un accéléromètre micro-usiné utilisant une masse sismique mobile suspendue par rapport au substrat par des liaisons élastiques autorisant principalement une translation dans son propre plan selon un axe sensible (Oy), la masse agissant sur au moins un résonateur allongé, par l'intermédiaire d'une structure d'amplification d'effort associée à ce résonateur, la structure d'amplification comportant un bras de levier rigide dont une première extrémité est reliée à la masse sismique par une liaison ayant, dans le plan de la masse, une forte raideur dans la direction de l'axe sensible (Oy) et une faible raideur dans le sens perpendiculaire, et dont une deuxième extrémité est reliée à un point d'ancrage sur le substrat, l'accéléromètre étant caractérisé en ce que la deuxième extrémité du bras de levier est une pièce rigide reliée au point d'ancrage par une liaison en rotation pure, le résonateur ayant une extrémité fixée à la pièce de tête rigide en un point tel que l'axe longitudinal du résonateur passe à une distance h, faible par rapport à la longueur L du bras de levier mais non nulle, du centre de rotation de la liaison en rotation.

Par "distance h faible par rapport à la longueur L", on entend le fait que le rapport Uh est suffisamment grand pour qu'il y ait une amplification d'effort, c'est-à-dire que l'effort exercé par le levier sur le résonateur soit supérieur à l'effort exercé par la masse sur le levier. Uh est de préférence au moins égal à 10.Grâce à cette construction, on peut choisir de manière quelconque la position et l'orientation des résonateurs, et ainsi optimiser la structure du point de vue de l'encombrement, tout en ayant une amplification importante de l'effort exercé par la masse ; dans les dispositifs antérieurs qui utilisent un levier d'amplification articulé en rotation, on plaçait en principe les résonateurs en alignement l'un avec l'autre de part et d'autre de la masse sismique ; cette disposition était très défavorable du point de vue de l'encombrement.

On peut en particulier, grâce à l'invention, disposer le ou les résonateurs le long d'un côté de la masse sismique et à proximité immédiate de ce côté pour minimiser l'encombrement. Le bras de levier aussi peut être placé le long d'un côté de la masse sismique, et dans ce cas c'est le long d'un côté perpendiculaire à l'axe sensible. Avec un bras de levier adjacent à un côté de la masse, et un résonateur également adjacent à un côté de la masse, on gagne considérablement en encombrement par rapport aux structures à amplification de l'art antérieur.

Le résonateur peut être une simple poutre résonante allongée. Il peut être aussi un résonateur diapason constitué par deux poutres parallèles symétriques dont les extrémités sont solidarisées ; on considère alors comme axe longitudinal du résonateur, passant à une distance h du centre de rotation du levier, la droite parallèle aux poutres passant alors entre les poutres à égale distance d'elles.

La tête rigide entoure de préférence au moins partiellement le point d'ancrage de la deuxième extrémité du bras de levier. Elle est de préférence reliée à ce point d'ancrage par deux bras de flexion souples perpendiculaires, ayant chacun une extrémité reliée au point d'ancrage ; les extrémités reliées au point d'ancrage sont très proches l'une de l'autre de sorte que les bras de flexion souples peuvent tourner pratiquement autour d'un même point, qu'on appellera centre de rotation du levier, situé à l'intersection des droites définies par les directions des deux bras de flexion. La tête rigide est constituée par un cadre fermé ou un cadre partiellement ouvert entourant le point d'ancrage et c'est sur ce cadre que peuvent être fixés les bras de flexion. Le cadre peut être de forme rectangulaire, et plus précisément carrée.

Grâce à la pièce de tête rigide en bout de levier qui entoure le point d'ancrage de la liaison en rotation du levier, on peut réaliser facilement une liaison en rotation plus souple que dans l'art antérieur, la souplesse étant liée au fait que les bras de liaison flexibles qui relient la pièce de tête au point d'ancrage peuvent être assez longs sans gêner la construction. La tête rigide est placée en principe sur le côté de la masse sismique et non au milieu d'un côté, sauf cas particulier.

Le point d'attache du résonateur sur la pièce de tête rigide est situé de préférence à un endroit tel que l'angle formé entre d'une part la ligne qui relie le point d'attache au centre de rotation et d'autre part la direction longitudinale du résonateur soit proche (de préférence aussi proche que possible) de 90°.

Le résonateur a, en principe, une autre extrémité fixée au substrat. Cependant, il peut aussi avoir cette autre extrémité fixée à un deuxième bras de levier identique symétrique, de sorte que les deux bras de levier tirent en même temps de chaque côté du résonateur ou poussent en même temps de chaque côté du résonateur. La configuration est alors de préférence la suivante : les deux bras de levier sont symétriques par rapport à l'axe Oy, passant par le centre de gravité de la masse sismique ; ils sont disposés dans le prolongement l'un de l'autre le long d'un bord de la masse sismique, leurs premières extrémités (celles qui actionnent le levier) étant reliées à la masse sismique par une liaison souple respective proche du milieu du bord de la masse ; le résonateur est disposé parallèlement aux deux bras.

Le bras de levier n'est donc pas forcément unique, c'est-à-dire qu'il peut y avoir deux bras de levier par résonateur.

De manière générale, on préfèrera une structure différentielle symétrique avec deux résonateurs subissant des efforts opposés (tension et compression respectivement) pour un même déplacement de la masse sismique. Dans ce cas, on prévoira en principe un bras de levier d'un côté de la masse (par exemple le long d'un bord perpendiculaire à l'axe sensible Oy) et un autre bras de levier d'un autre côté de la masse (par exemple le long du bord opposé de la masse). La structure préférée comporte alors au moins deux résonateurs disposés symétriquement par rapport au centre de gravité de la masse sismique, et deux structures d'amplification d'effort, associées chacune à un résonateur respectif, symétriques par rapport au centre de gravité.

D'autres caractéristiques et avantages de l'invention apparaîtront à la lecture de la description détaillée qui suit et qui est faite en référence aux dessins annexés dans lesquels :
- la figure 1 représente une vue en plan de la structure générale de l'accéléromètre micro-usiné selon l'invention, dans laquelle le cadre rigide constituant la tête du levier comporte une échancrure à l'endroit de l'attache du résonateur ;
- la figure 2 représente une variante de réalisation dans laquelle la tête rigide est un cadre coupé à l'endroit de l'attache du résonateur ;
- la figure 3 représente une réalisation dans laquelle le cadre rigide est fermé et sans échancrure ;
- la figure 4 représente une réalisation dans laquelle le cadre comporte une excroissance à l'endroit de l'attache du résonateur ;
- la figure 5 représente une réalisation dans laquelle la longueur du bras de levier est augmentée par rapport à celle des figures précédentes ;
- la figure 6 représente une réalisation dans laquelle le résonateur est attaché entre les extrémités de deux bras de levier symétriques agissant simultanément en traction ou en compression ;
- la figure 7 représente une réalisation dans laquelle le résonateur n'est pas sur le même bord de la masse sismique que le bras de levier ;
- la figure 8 représente une réalisation dans laquelle le résonateur fait un angle quelconque avec les côtés de la masse sismique ainsi qu'avec le bras de levier ;
- la figure 9 représente une réalisation dans laquelle le résonateur est de type diapason ;
- la figure 10 représente une réalisation dans laquelle la masse sismique est suspendue par des bras situés au centre de la masse plutôt qu'aux quatre coins.

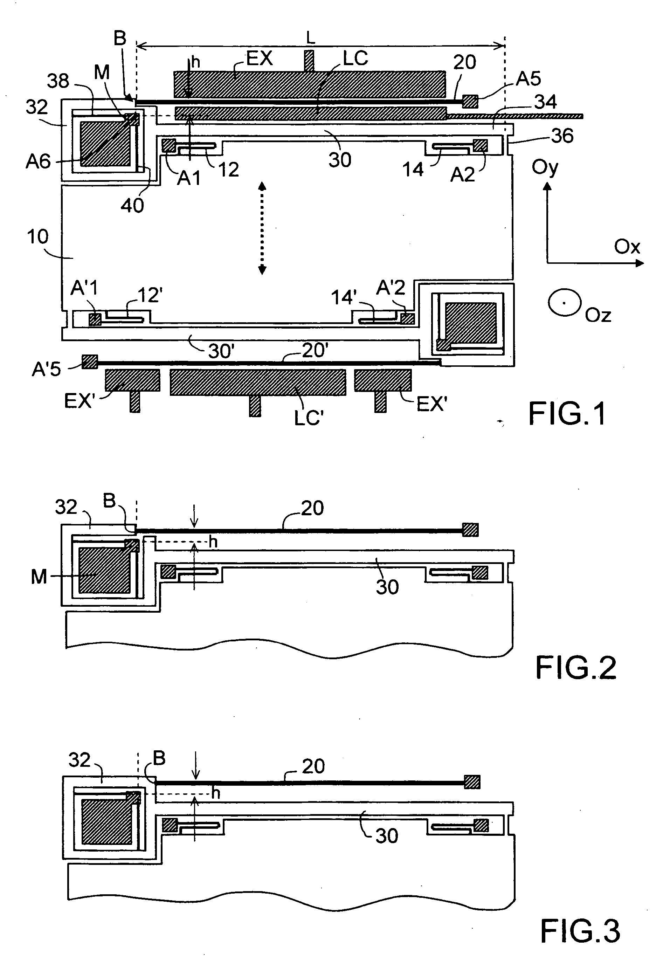

La structure générale de l'accéléromètre selon l'invention est représentée à la figure 1. On a représenté par des zones hachurées les parties qui sont fixes, c'est-à-dire celles qui font partie directement du substrat dans lequel la structure a été micro-usinée. Ces zones constituent des points d'ancrage par rapport auxquels d'autres parties de la structure sont suspendues.

La masse sismique mobile est désignée par la référence 10. Elle est suspendue au substrat par des liaisons élastiques souples ayant essentiellement un seul degré de liberté, en translation selon l'axe Oy. L'axe Oy est l'axe sensible de l'accéléromètre. Bien entendu, dans la réalité les liaisons élastiques souples ne sont pas parfaitement rigides selon les autres axes de sorte que des mouvements selon d'autres degrés de liberté en translation ou en rotation restent possibles, mais ils sont négligeables devant le mouvement selon Oy de sorte qu'on peut considérer pour simplifier qu'il n'y a qu'un degré de liberté en translation selon Oy.

Pour atteindre ce résultat, on peut par exemple, comme c'est représenté sur la figure 1, prévoir quatre points d'ancrage, A1, A2, A'1, A'2 répartis autour de la masse sismique, et un bras de liaison élastique respectif en U à deux branches allongées pour relier la masse à chacun de ces points. Ces bras de liaison en U à branches allongées, désignés par 12, 14, 12', 14', ont une forte raideur dans le sens de l'allongement du U et une faible raideur perpendiculairement à l'allongement du U. C'est pourquoi ils n'autorisent qu'un déplacement dans ce dernier sens. Les branches allongées du U sont donc orientées selon l'axe Ox, perpendiculaire à Oy dans le plan du substrat. Les bras possèdent aussi une raideur suffisante dans le sens Oz pour ne pas autoriser de déplacements de la masse dans le sens Oz.

D'autres solutions pour autoriser un mouvement de translation selon Oy seulement peuvent être utilisées, par exemple par un ou plusieurs points d'ancrage situés dans la partie centrale de la masse sismique (entourés par la masse sismique) et des bras de liaison élastiques allongés dans la direction Ox entre la masse et ce ou ces points.

La structure comprend encore un résonateur et une structure d'amplification d'effort associée au résonateur, pour transmettre au résonateur un effort d'accélération subi par la masse avec un effet d'amplification. De préférence, comme c'est représenté sur la figure 1, la structure de l'accéléromètre est symétrique en ce sens qu'il y a deux résonateurs 20 et 20' subissant des efforts en sens contraire lors d'un même déplacement de la masse, et une structure d'amplification respective associée à chacun de ces résonateurs.

Sur la figure 1, les résonateurs 20 et 20' sont constitués chacun par une simple poutre résonante ayant une extrémité reliée à un point d'ancrage fixe (A5 et A'5 respectivement) et une autre extrémité reliée à la structure d'amplification d'effort respective.

La structure d'amplification d'effort associée au résonateur 20 comprend un bras de levier 30 ayant une première extrémité ou extrémité d'actionnement 34 reliée à la masse rigide et une deuxième extrémité constituée par une pièce de tête rigide (ici un cadre carré 32). La liaison 36 entre la première extrémité du bras de levier et la masse sismique est telle que cette extrémité soit tirée ou poussée par la masse lorsqu'elle subit une accélération selon son axe sensible. De plus, cette liaison est élastique dans le sens perpendiculaire à Oy de sorte que le bras de levier poussé ou tiré puisse conserver un degré de liberté en rotation. Sur la figure 1, la liaison 36 entre la masse sismique et la première extrémité du bras de levier est un bras flexible rectiligne allongé dans la direction Oy, donc susceptible de fléchir dans la direction Ox. Ce bras flexible possède un point d'attache à la masse, placé aux environs d'un coin de la masse sismique (c'est-à-dire un point éloigné d'un axe parallèle à Oy et passant par le centre de gravité de la masse).

La deuxième extrémité du levier, globalement constituée par le cadre carré rigide 32, est reliée au substrat par une liaison souple ayant essentiellement un seul degré de liberté de mouvement, qui est un degré de liberté en rotation plane autour d'un centre de rotation fixe M ; le levier ne peut que tourner dans le plan du substrat autour du centre de rotation. Dans la réalisation de la figure 1, le cadre carré 32 entoure totalement le centre de rotation M mais on verra qu'il peut aussi ne l'entourer que partiellement.

Le bras de levier 30 peut ainsi être poussé ou tiré par la masse agissant sur sa première extrémité 34 et ne peut que tourner autour du centre M et il est suffisamment rigide pour ne pas se déformer significativement, notamment en flexion. La flexibilité importante, selon Ox mais pas selon Oy, du bras flexible 36 autorise ce mouvement de rotation pure, c'est-à-dire pure ou presque pure compte-tenu de mouvements parasites possibles au deuxième degré, les raideurs des liaisons considérées comme ayant une grande raideur ne pouvant pas être infinies, pas plus que les rigidités élevées ne peuvent être infinies) ; cette rotation pure est possible malgré le fait que l'actionnement de l'extrémité 34 du bras soit effectué selon l'axe Oy.

Le résonateur allongé 20 qui est représenté à la figure 1 possède une première extrémité attachée au carré rigide 32, en un point d'attache qui permet au cadre d'exercer un effort longitudinal sur le résonateur lorsque le bras de levier tourne autour du centre M, cet effort étant supérieur, du fait du bras de levier, à l'effort exercé par la masse sur le bras de levier. La deuxième extrémité du résonateur est, comme on l'a dit, attachée au point d'ancrage A5.

On considère que le résonateur possède un axe longitudinal qui est une droite dirigée selon la direction d'allongement du résonateur et passant par un axe de symétrie de celui-ci : si c'est une simple poutre résonante de faible largeur, l'axe est pratiquement constitué par la poutre elle-même ; si c'est une double poutre (résonateur diapason à deux poutres parallèles), l'axe est une droite parallèle aux poutres et passant entre les poutres au milieu de l'intervalle qui les sépare.

Quelle que soit la constitution du résonateur, il est disposé de manière telle que son axe passe à une distance h du centre de rotation M, la distance h étant faible devant la longueur L du bras de levier 30. Par longueur du bras de levier, on entend la distance qui sépare le point d'attache de la masse au bras de levier du centre de rotation M. Le rapport Uh est de préférence au moins égal à 10.

Dans l'exemple de la figure 1, le bras de levier est allongé dans la direction Ox perpendiculaire à l'axe sensible, et le centre de rotation M est situé à proximité de l'axe longitudinal du bras de levier ; il n'est pas nécessaire que cet axe passe exactement par le centre de rotation M.

Si on appelle B le point d'attache du résonateur sur le cadre rigide 32 à l'extrémité du bras de levier, il est souhaitable que le point B soit situé à un endroit tel que l'angle formé entre d'une part la ligne BM qui relie le point d'attache B au centre de rotation M et d'autre part la direction longitudinale du résonateur (Ox sur la figure 1) soit aussi proche que possible de 90°. Cela permet que la poutre résonante ne subisse d'efforts que dans la direction de son allongement. Il est inutile en effet qu'elle subisse un moment de flexion à ses extrémités, perpendiculairement à sa direction longitudinale propre. Si le point d'attache B est placé à un endroit tel que l'angle α soit différent de 90°, la structure fonctionne avec une composante de flexion de la poutre et avec un effet d'amplification d'effort (dans le sens de la tension ou de la compression longitudinale) réduit à cause de cet angle. Le coefficient amplificateur entre l'effort appliqué par la masse et l'effort de tension ou compression longitudinale est en effet grossièrement de la forme (Uh). Des considérations pratiques de fabrication peuvent nécessiter que l'angle α soit différent de 90°. Si on ne peut pas utiliser un angle proche de 90° (comme on le verra plus loin à propos de la figure 3), il pourra être souhaitable d'augmenter le rapport Uh si on veut conserver un rapport d'amplification d'au moins 10.

Dans le cas de la figure 1, on a constitué un point d'attache B sur cette ligne à 90° de l'axe de la poutre en pratiquant un décrochement dans le cadre rigide qui a par ailleurs de préférence une section constante tout autour du centre de rotation M ; on verra qu'on peut aussi couper le cadre rigide à cet endroit pour réaliser ce point d'attache en minimisant la hauteur h ou au contraire, si on ne souhaite pas risquer d'affaiblir la rigidité du cadre 32 par une découpe ou un décrochement, on verra qu'on peut aussi prévoir une excroissance sur le cadre rigide ou d'autres formes plus complexes.

La liaison en rotation pure entre la pièce de tête rigide (cadre 32) et le substrat est réalisée de préférence de la manière suivante : le centre de rotation M est situé sur une zone d'ancrage A6 du substrat. Deux bras flexibles simples 38 et 40 partent sensiblement d'un même point d'attache sur cette zone d'ancrage (ou de deux points très voisins les plus proches possibles de la position désirée pour le centre de rotation M) ; les bras flexibles 38 et 40 s'étendent dans des directions différentes (de préférence orthogonales, par exemple l'un selon Ox et l'autre selon Oy) entre leur point d'attache sur la zone d'ancrage A6 et un point d'attache à l'intérieur du cadre rigide. Le cadre a une dimension intérieure suffisante pour que les bras 38 et 40 puissent avoir un allongement qui leur donne une faible raideur dans le sens perpendiculaire à cet allongement. Les bras ont une raideur kₓ dans le sens de leur allongement qui est très supérieure à la raideur k_{y} en flexion : kₓ/k_{y} est approximativement égal à [Lₚ/Wₚ]² où Lₚ et Wₚ sont respectivement la longueur et la largeur des bras. Grâce à cette construction, on réalise une liaison en rotation pure ou presque pure à faible raideur, qui n'était guère envisageable avec les structures de l'art antérieur (utilisant plutôt des charnières très courtes). Même si cette liaison est relativement encombrante à cause de la dimension des bras 38 et 40 et du cadre rigide 32, elle laisse la possibilité de placer la poutre résonante très proche de la masse sismique et l'encombrement global de la masse sismique peut être réduit.

La structure préférée de l'invention est une structure symétrique et comporte alors, comme on le voit sur la figure 1 un deuxième résonateur 20', une deuxième bras de levier 30' tourné dans la direction opposée et actionné à partir d'un point de la masse qui est diagonalement opposé au point d'actionnement du bras de levier 30. Plus généralement, tous les éléments de la masse, du bras de levier et du résonateur situés d'un côté de la masse sont symétriques des éléments correspondants de l'autre côté, la symétrie étant par rapport au centre de gravité de la masse sismique.

Les résonateurs sont classiques et on a principalement représenté une poutre vibrante, mais le résonateur complet comprend bien sûr des éléments d'excitation de la vibration et des éléments de lecture de la fréquence de vibration de la poutre. Ces éléments sont représentés de manière purement symbolique sur la figure 1 : les éléments d'excitation EX peuvent être situés tout le long de la poutre, d'un côté de celle-ci, avec les éléments de lecture LC de l'autre côté de la poutre. C'est ce qui est représenté en haut de la figure. Mais on peut prévoir aussi d'autres dispositions, telles que par exemple des éléments d'excitation EX' aux extrémités de la poutre et des éléments de lecture LC' au voisinage de la partie centrale de la poutre. C'est ce qui est représenté en bas de la figure 1. Dans une réalisation industrielle, les éléments d'excitation et de lecture seraient disposés de la même manière mais symétriquement en haut et en bas de la figure et la représentation d'éléments différents sur la figure 1 a seulement pour objet de faire comprendre qu'il y a plusieurs dispositions possibles pour ces éléments.

Les éléments d'excitation et lecture n'ont pas été représentés sur les autres figures pour ne pas alourdir le dessin.

On notera que bien que le point d'ancrage A6 soit situé le plus près possible du point B d'attache de la poutre résonante, donc tout près d'un bord intérieur du cadre rigide 32, la forme générale du point d'ancrage A6 peut occuper presque tout l'espace disponible à l'intérieur de ce cadre, à l'exception de la partie occupée par les bras de liaison flexible 38 et 40. Par ailleurs, les points d'ancrage A1 et A2 peuvent constituer une butée pour la masse, limitant les risques de cassure en cas de mouvements intempestifs dus à des chocs. D'autres butées, non représentées, peuvent être prévues ailleurs.

La figure 2 représente une variante possible de réalisation de la pièce de tête rigide, dans laquelle le cadre rigide 32 est coupé pour réduire encore la hauteur h sans empêcher l'accrochage de la poutre résonante en un point B situé sur un rayon de rotation à 90° de la direction de la poutre.

La figure 3 représente une autre variante dans laquelle le cadre 32 ne présente ni décrochement ni coupure, pour assurer une meilleure rigidité du cadre 32, mais dans laquelle le point d'attache de la poutre résonante n'est pas situé sur un rayon de rotation à 90° de l'axe de la poutre, ce qui a pour effet de réduire le coefficient d'amplification d'effort.

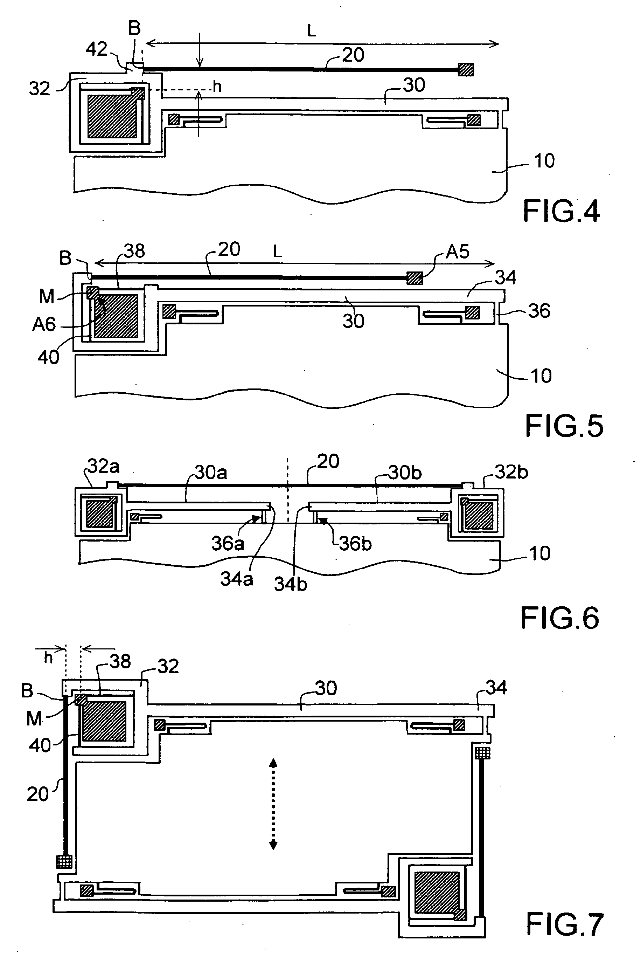

La figure 4 représente une variante dans laquelle le cadre 32 a une section constante mais présente une excroissance 42 permettant d'attacher le résonateur sur un rayon de rotation à 90° de l'axe de la poutre sans affaiblir la rigidité du cadre ; cette disposition tend cependant à augmenter la distance h donc à réduire le coefficient d'amplification d'effort du bras de levier.

La figure 5 représente une variante dans laquelle le centre de rotation fixe M est placé différemment à l'intérieur du cadre rigide 32 : il est placé plus à l'extérieur que dans les figures 1 à 4, ce qui permet d'augmenter la longueur L du bras de levier sans changer l'encombrement global. En pratique, de même que le centre de rotation pouvait, dans le cas des figures 1 à 4, être très près d'un bord intérieur droit du cadre 32 (le plus près de l'extrémité d'actionnement 34 du levier), il est maintenant très près d'un bord intérieur gauche du cadre 32 (le plus loin de l'extrémité 34). Le cadre rigide 32 reste relié à une zone d'ancrage A6 par deux bras flexibles longitudinaux, de préférence perpendiculaires entre eux, qui rejoignent cette zone d'ancrage en deux points très proches l'un de l'autre de manière à constituer un centre de rotation M à l'intersection des axes longitudinaux 38 et 40 des deux bras. Dans cette réalisation, il est nécessaire de couper une portion plus importante du cadre rigide si on adopte la disposition avec cadre coupé de la figure 2. Les autres dispositions de cadre sont cependant aussi possibles (échancrure, excroissance).

On comprendra par conséquent que dans la figure 5 la particularité est qu'il y a un bras de liaison (38) entre l'extrémité 34 du bras de levier 30 et le centre de rotation M alors que dans les figures 1 à 4, c'est le centre de rotation M qui est situé entre le bras de liaison (38) et l'extrémité 34 du bras de levier 30.

La figure 6 représente une variante de réalisation dans laquelle on établit une symétrie par rapport à un axe vertical (parallèle à l'axe sensible Oy) passant par le centre de gravité de la masse. La structure présente deux leviers 30a et 30b dans le prolongement l'un de l'autre le long d'un bord de la masse (parallèle à Ox) ; ils sont tirés ou poussés dans la même direction par la masse mais orientés en sens inverse de sorte qu'ils tournent en sens inverse, et le résonateur est accroché aux extrémités 32a, 32b (cadres carrés rigides) des deux leviers. Quand la masse bouge dans un sens, les deux leviers tirent chacun sur une extrémité du résonateur ; quand elle bouge dans l'autre sens, les deux leviers poussent les deux extrémités du résonateur l'une vers l'autre. Et les efforts sont inversés pour les deux leviers situés de l'autre côté de la masse sismique, la symétrie étant aussi bien par rapport à un axe central parallèle à Ox que par rapport à un axe central parallèle à Oy. Il est important de constater que dans ce cas, le résonateur n'est pas ancré au substrat par une extrémité. Dans cette configuration, les extrémités 34a, 34b des deux leviers symétriques sont indépendantes et reliées chacune au centre du bord supérieur de la masse sismique par un bras de liaison flexible respectif 36a, 36b (allongé et raide dans la direction de l'axe sensible Oy, capable de souplesse selon l'axe Ox).

La structure représentée à la figure 6 correspond au cas où une excroissance est formée sur chacun des cadres rigides pour définir le point d'attache du résonateur. Mais on peut bien sûr aussi prévoir un cadre pourvu d'une échancrure comme à la figure 1 ou coupé comme à la figure 2 ou attaché en un point non situé sur un rayon à 90° de l'axe de la poutre comme à la figure 3. Et on peut aussi prévoir que le centre de rotation de chaque levier est disposé comme à la figure 5 plutôt que comme à la figure 4, afin d'augmenter la longueur efficace L des bras de levier ; les bras de levier ont en effet une longueur moitié de celle des figures précédentes et il est utile de tirer parti de toutes les possibilités d'augmentation de leur longueur.

La figure 7 représente une configuration différente des précédentes, dans laquelle le bras de levier 30 est placé le long d'un côté de la masse sismique, essentiellement perpendiculairement à l'axe sensible, mais le résonateur allongé 20 est placé le long d'un autre côté, perpendiculaire au premier, donc parallèlement à l'axe sensible Oy. Le fonctionnement est le même et cette disposition peut être préférable dans certains cas en termes d'encombrement puisque le premier côté de la masse est déjà occupé par le bras de levier. Le point d'ancrage A5 du résonateur est placé à proximité du deuxième côté de la masse. La position du centre de rotation est de préférence celle de la figure 5, c'est-à-dire avec un bras de flexion 38 disposé entre le centre de rotation M et l'extrémité 34 du bras de levier. Les dispositions avec échancrure ou avec excroissance sur le cadre rigide 32 sont utilisables ici aussi.

La figure 8 montre une configuration dans laquelle la poutre résonante 20 n'est pas placée le long d'un côté de la masse sismique. Cette configuration est plus encombrante globalement mais peut être utile lorsqu'il est nécessaire de ménager plus de place pour la réalisation des éléments d'excitation de la vibration et de lecture de la fréquence de vibration autour de la poutre. On voit que la structure selon l'invention permet de choisir n'importe quelle orientation de résonateur ce qui est un avantage en particulier pour tenir compte des contraintes de fabrication et d'optimisation de l'encombrement du dispositif muni de sa connectique . Notons aussi que le bras de levier n'est pas forcément parallèle à un côté de la masse sismique bien que cette disposition soit la plus avantageuse. Le bras de levier pourrait donc former n'importe quel angle avec la direction d'allongement du résonateur et avec les directions Ox ou Oy. Les dispositions les plus avantageuses en termes d'encombrement et d'efficacité du bras de levier sont cependant celles qui ont été indiquées sur les figures précédentes dès lors qu'on dispose de suffisamment de place pour loger les éléments d'excitation et de lecture des vibrations.

La figure 9 représente une disposition inspirée de la figure 3 (mais on aurait pu s'inspirer aussi des autres figures), dans laquelle le résonateur 20 est de type diapason, constitué par deux poutres résonantes parallèles proches l'une de l'autre, toutes deux ancrées sur le point d'ancrage A5 et sur le cadre rigide 32. On notera qu'on pourrait prévoir une pièce intermédiaire entre le cadre rigide et les deux poutres résonantes, les poutres étant encastrées dans cette pièce et la pièce étant reliée au cadre rigide par une charnière ou une liaison souple (dans l'axe du résonateur), pour mieux répartir sur les deux poutres l'effort exercé par le bras de levier. L'axe du résonateur, situé à une distance h du centre de rotation M, est un axe longitudinal passant le long des poutres, entre celles-ci et à égale distance d'elles.

La figure 10 représente une réalisation dans laquelle la masse sismique est suspendue au substrat par sa partie centrale et non par ses quatre coins. Un seul point d'ancrage A0 peut suffire à la place des ancrages A1, A2, A'1, A'2 ; le point A0 est placé sensiblement au centre de gravité de la masse, mais deux points d'ancrage situés sur un axe parallèle à Ox et passant par le centre de gravité peuvent aussi convenir. Les bras de liaison flexibles 12 et 14 qui supportent la masse peuvent s'étendre le long d'un axe de symétrie parallèle à Ox pour donner une grande raideur dans la direction Ox et une faible raideur dans la direction Oy. La masse présente une découpe centrale allongée pour permettre d'y placer les bras 12 et 14.

Dans ce qui précède, on a représenté un cadre rigide carré, mais il peut avoir une autre forme, par exemple en O ouvert ou fermé ou en U à branches de même longueur ou non. Il entoure le centre de rotation totalement (ou partiellement si on accepte une réduction de sa rigidité) à une distance du centre de rotation M telle qu'on puisse placer deux bras flexibles (ou plus de deux) qui ont une longueur conférant la souplesse désirée.

La rigidité du bras de levier dans le sens de la flexion selon l'axe sensible Oy doit être largement supérieure à la rigidité en tension/compression du résonateur, afin que la résistance à la tension/compression du résonateur n'induise pas de flexion significative du bras de levier poussé ou tiré par la masse sismique.

On parvient à une rigidité suffisante essentiellement en prévoyant une largeur suffisante de la barre formant le levier et le cadre rigide. Globalement, il faut que le rapport 4L³/W³ soit suffisamment inférieur au rapport K.(Lr/wr), en supposant que l'épaisseur du bras de levier dans le sens Oz est égale à l'épaisseur du résonateur ; w est la largeur du bras de levier, wr celle du résonateur ; Lr est la longueur du résonateur. K est le rapport d'amplification de la structure d'amplification, égal à Uh dans le cas le plus favorable.

La structure d'accéléromètre peut être fabriquée en utilisant les technologies de micro-usinage classiques d'accéléromètres sur tranches de silicium : on part d'un substrat de silicium sur isolant (SOI) et on réalise des motifs par photolithographie et gravure du silicium qui repose sur une couche d'oxyde ; on dépose et on grave une couche métallique, par exemple une superposition de chrome et d'or, pour définir les connexions électriques, et on libère les parties mobiles de la structure par enlèvement (en gravure humide) de l'oxyde de silicium sur lequel reposent ces parties mobiles ; les parties mobiles sont à cet effet percées de multiples petits trous par lesquels peuvent s'évacuer l'oxyde, laissant les parties mobiles en surplomb au-dessus du substrat

Parmi les avantages de la structure selon l'invention, on peut signaler encore :
- l'utilisation conjointe d'une masse en translation, d'un bras de levier et de l'articulation en rotation est une configuration très modulaire puisqu'elle n'impose pas la position relative de tous ces éléments pour un bon fonctionnement (ce qui peut être utile pour optimiser le placement des électrodes d'excitation ou de détection) ; en particulier elle n'impose pas la position du centre de gravité de la masse sismique ;
- un ou deux résonateurs peuvent être utilisés pour un fonctionnement différentiel ou non-différentiel ; si le fonctionnement est différentiel, la structure doit être symétrique par rapport au centre de gravité de la masse ; les résonateurs peuvent être des poutres ou des diapasons ;
- la modularité permet l'indépendance des dimensions de la masse, du bras de levier, et du résonateur ; le bras de levier est cependant avantageusement de grande longueur et sera relié à la masse à son extrémité pour favoriser l'amplification ;
- le bras de levier sera avantageusement placé le long de la masse sismique et le résonateur le long du bras de levier, pour optimiser l'encombrement ;
- l'articulation proposée permet de placer le résonateur à l'angle que l'on souhaite et de connaître précisément l'emplacement du centre de rotation ; la distance de ce centre au résonateur est connue et peut être la plus petite possible, ce qui favorise l'amplification ;
- le comportement de cette articulation ne repose pas sur la qualité de fabrication de charnières souples mais est basé sur des poutres faciles à fabriquer ;
   l'architecture n'utilise qu'une seule charnière souple et ses performances n'en dépendent pas au premier ordre ;
- une extrémité de chaque résonateur est ancrée au substrat et l'autre est reliée à un cadre rigide, ce qui favorise un bon facteur de qualité ;
- dans le cas d'une utilisation en différentiel, les deux résonateurs ne sont pas directement reliés par une pièce mécanique, et les ondes élastiques produites par l'un n'atteignent l'autre que très difficilement ; les phénomènes de couplage sont minimisés et les zones aveugles limitées ;
- la masse étant suspendue au substrat par des ancrages, ces ancrages peuvent servir de butée, limitant le déplacement de la masse en cas de choc dans toutes les directions, évitant ainsi la destruction du capteur.

## Revendications

1. Accéléromètre micro-usiné utilisant une masse sismique mobile (10) suspendue par rapport au substrat par des liaisons élastiques (12, 14) autorisant principalement une translation dans son propre plan selon un axe sensible (Oy), la masse agissant sur au moins un résonateur allongé (20), par l'intermédiaire d'une structure d'amplification d'effort associée à ce résonateur, la structure d'amplification comportant un bras de levier rigide (30) dont une première extrémité (34) est reliée à la masse sismique par une liaison (36) ayant, dans le plan de la masse, une forte raideur dans la direction de l'axe sensible (Oy) et une faible raideur dans le sens perpendiculaire, et dont une deuxième extrémité (32) est reliée à un point (A6) d'ancrage sur le substrat, l'accéléromètre étant **caractérisé en ce que** la deuxième extrémité (32) du bras de levier est une pièce rigide reliée au point d'ancrage (A6) par une liaison en rotation pure (38, 40) autour d'un centre de rotation (M), le résonateur ayant une extrémité fixée à la pièce de tête rigide en un point (B) tel que l'axe longitudinal du résonateur passe à une distance h, faible par rapport à la longueur L du bras de levier mais non nulle, du centre de rotation (M) de la liaison en rotation.

2. Accéléromètre selon la revendication 1, **caractérisé en ce que** la pièce rigide à la deuxième extrémité du bras de levier entoure le point d'ancrage (A6).

3. Accéléromètre selon l'une des revendications 1 et 2, **caractérisé en ce que** le résonateur (20) est disposé le long d'un côté de la masse sismique et à proximité immédiate de ce côté.

4. Accéléromètre selon l'une des revendications 1 à 3, **caractérisé en ce que** le bras de levier est placé le long d'un côté de la masse sismique, perpendiculairement à l'axe sensible (Oy).

5. Accéléromètre selon l'une des revendications précédentes, **caractérisé en ce que** la liaison en rotation entre la pièce rigide (32) du bras de levier et le point d'ancrage (A6) est constituée par au moins deux bras de flexion souples (38 et 40) ayant des orientations différentes, attachés en des points très proches l'un de l'autre sur le point d'ancrage (A6) et attachés par ailleurs à la pièce de tête rigide (32).

6. Accéléromètre selon la revendication 5, **caractérisé en ce que** le centre de rotation (M) est situé entre la deuxième extrémité (34) du bras de levier et l'un des bras de flexion souples (38).

7. Accéléromètre selon la revendication 5, **caractérisé en ce que** l'un des bras flexion souples (38) de la liaison en rotation est situé entre le centre de rotation et la deuxième extrémité (34) du bras de levier.

8. Accéléromètre selon l'une des revendications précédentes, **caractérisé en ce que** la pièce rigide (32) est constituée par un cadre rectangulaire fermé ou partiellement ouvert.

9. Accéléromètre selon l'une des revendications précédentes, **caractérisé en ce que** le point d'attache du résonateur sur la pièce rigide est situé en un point (B) de la pièce tel que l'angle formé entre d'une part la ligne qui relie le point d'attache au centre de rotation (M) et d'autre part la direction longitudinale du résonateur soit proche de 90°.

10. Accéléromètre selon l'une des revendications 1 à 9, **caractérisé en ce que** le résonateur est une simple poutre résonante allongée ou un ensemble de deux poutres résonantes parallèles couplées mécaniquement.

11. Accéléromètre selon l'une des revendications 1 à 10, **caractérisé en ce que** le résonateur a une extrémité attachée à un point d'ancrage (A5) sur le substrat.

12. Accéléromètre selon l'une des revendications 1 à 10, **caractérisé en ce qu'**il comporte deux bras de levier symétriques (30a, 30b) entraînés en mouvement en rotation dans des sens inverses lors d'un déplacement de la masse sismique selon l'axe sensible, et **en ce que** le résonateur (20) a deux extrémités attachées chacune à la pièce rigide (32a, 32b) d'un bras de levier respectif.

13. Accéléromètre selon la revendication 12, **caractérisé en ce que** les deux bras de levier symétriques sont disposés dans le prolongement l'un de l'autre le long d'un bord de la masse sismique, leurs deuxièmes extrémités (34a, 34b) étant reliées à la masse sismique par une liaison souple respective (36a, 36b) proche du milieu du bord de la masse, le résonateur étant disposé parallèlement aux deux bras.

14. Accéléromètre selon l'une des revendications précédentes, **caractérisé en ce qu'**il possède au moins deux résonateurs (20, 20') disposés symétriquement par rapport au centre de gravité de la masse sismique, et deux structures d'amplification d'effort (30, 30'), associées chacune à un résonateur respectif, symétriques par rapport au centre de gravité.

## Claims

1. A micromachined accelerometer using a movable seismic mass (10) suspended in relation to the substrate by elastic connections (12, 14) principally allowing translation in its own plane along a sensitive axis (Oy), the mass acting on at least one elongate resonator (20) by means of a force amplification structure associated with this resonator, the amplification structure comprising a rigid lever arm (30), a first end (34) of which is connected to the seismic mass by a connection (36) having, in the plane of the mass, a high stiffness in the direction of the sensitive axis (Oy) and a low stiffness in the perpendicular direction, and a second end (32) of which is connected to an anchor point (A6) on the substrate, the accelerometer being **characterized in that** the second end (32) of the lever arm is a rigid piece connected to the anchor point (A6) by a purely rotational connection (38, 40) about a center of rotation (M), the resonator having one end fixed to the rigid head piece at a point (B) such that the longitudinal axis of the resonator passes a distance h, small in relation to the length L of the lever arm but nonzero, from the center of rotation (M) of the rotational connection.

2. The accelerometer as claimed in claim 1, **characterized in that** the rigid piece at the second end of the lever arm surrounds the anchor point (A6).

3. The accelerometer as claimed in one of claims 1 and 2, **characterized in that** the resonator (20) is arranged along one side of the seismic mass and in immediate proximity to this side.

4. The accelerometer as claimed in one of claims 1 to 3, **characterized in that** the lever arm is placed along one side of the seismic mass perpendicular to the sensitive axis (Oy).

5. The accelerometer as claimed in one of the preceding claims, **characterized in that** the rotational connection between the rigid piece (32) of the lever arm and the anchor point (A6) consists of at least two flexible bending arms (38 and 40) having different orientations, attached at points very close to one another on the anchor point (A6) and furthermore attached to the rigid head piece (32).

6. The accelerometer as claimed in claim 5, **characterized in that** the center of rotation (M) is situated between the second end (34) of the lever arm and one of the flexible bending arms (38).

7. The accelerometer as claimed in claim 5, **characterized in that** one of the flexible bending arms (38) of the rotational connection is located between the center of rotation and the second end (34) of the lever arm.

8. The accelerometer as claimed in one of the preceding claims, **characterized in that** the rigid part (32) consists of a closed or partly open rectangular frame.

9. The accelerometer as claimed in one of the preceding claims, **characterized in that** the point of attachment of the resonator on the rigid piece is situated at a point (B) of the piece such that the angle formed between the line that connects the attachment point to the center of rotation (M), on the one hand, and the longitudinal direction of the resonator, on the other hand, is close to 90°.

10. The accelerometer as claimed in one of claims 1 to 9, **characterized in that** the resonator is a simple elongate resonant beam or an assembly of two mechanically coupled parallel resonant beams.

11. The accelerometer as claimed in one of claims 1 to 10, **characterized in that** the resonator has one end attached to an anchor point (A5) on the substrate.

12. The accelerometer as claimed in one of claims 1 to 10, **characterized in that** it comprises two symmetric lever arms (30a, 30b) driven to move rotationally in opposite directions when the seismic mass moves along the sensitive axis, and **in that** the resonator (20) has two ends, each attached to the rigid piece (32a, 32b) of a respective lever arm.

13. The accelerometer as claimed in claim 12, **characterized in that** the two symmetric lever arms are arranged in line with each other along one edge of the seismic mass, their second ends (34a, 34b) being connected to the seismic mass by a respective flexible connection (36a, 36b) close to the middle of the edge of the mass, the resonator being positioned parallel to the two arms.

14. The accelerometer as claimed in one of the preceding claims, **characterized in that** it has at least two resonators (20, 20') arranged symmetrically in relation to the center of gravity of the seismic mass, and two force amplification structures (30, 30'), each associated with a respective resonator and symmetric in relation to the center of gravity.

## Patentansprüche

1. Mikrobearbeiteter Beschleunigungsmesser, der eine bewegliche seismische Masse (10) benutzt, die in Bezug auf das Substrat an elastischen Verbindungen (12, 14) aufgehängt ist, die hauptsächlich eine Translation in ihrer eigenen Ebene über eine empfindliche Achse (Oy) zulassen, wobei die Masse auf wenigstens einen länglichen Resonator (20) über eine mit diesem Resonator assoziierte Kraftverstärkungsstruktur wirkt, wobei die Verstärkungsstruktur einen starren Hebelarm (30) umfasst, dessen erstes Ende (34) mit der seismischen Masse durch eine Verbindung (36) verbunden ist, die in der Ebene der Masse eine große Starrheit in der Richtung der empfindlichen Achse (Oy) und eine geringe Starrheit in der lotrechten Richtung hat, und dessen zweites Ende (32) mit einem Verankerungspunkt (A6) auf dem Substrat verbunden ist, wobei der Beschleunigungsmesser **dadurch gekennzeichnet ist, dass** das zweite Ende (32) des Hebelarms ein starres Stück ist, das mit dem Verankerungspunkt (A6) durch eine reine Drehverbindung (38, 40) um einen Drehpunkt (M) verbunden ist, wobei der Resonator ein Ende aufweist, das an dem starren Kopfstück an einem Punkt (B) befestigt ist, so dass die Längsachse des Resonators in einem Abstand h, der in Bezug auf die Länge L des Hebelarms gering, aber ungleich null ist, vom Drehpunkt (M) der Drehverbindung verläuft.

2. Beschleunigungsmesser nach Anspruch 1, **dadurch gekennzeichnet, dass** das starre Stück am zweiten Ende des Hebelarms den Verankerungspunkt (A6) umgibt.

3. Beschleunigungsmesser nach einem der Ansprüche 1 und 2, **dadurch gekennzeichnet, dass** der Resonator (20) entlang einer Seite der seismischen Masse und in unmittelbarer Nähe dieser Seite angeordnet ist.

4. Beschleunigungsmesser nach einem der Ansprüche 1 bis 3, **dadurch gekennzeichnet, dass** der Hebelarm entlang einer Seite der seismischen Masse lotrecht zur empfindlichen Achse (Oy) platziert ist.

5. Beschleunigungsmesser nach einem der vorherigen Ansprüche, **dadurch gekennzeichnet, dass** die Drehverbindung zwischen dem starren Stück (32) des Hebelarms und dem Verankerungspunkt (A6) von wenigstens zwei elastischen Biegearmen (38 und 40) mit unterschiedlichen Ausrichtungen gebildet wird, die an drei Punkten sehr nahe beieinander an dem Verankerungspunkt (A6) und zudem an dem starren Kopfstück (32) angebracht sind.

6. Beschleunigungsmesser nach Anspruch 5, **dadurch gekennzeichnet, dass** sich der Drehpunkt (M) zwischen dem zweiten Ende (34) des Hebelarms und einem der elastischen Biegearme (38) befindet.

7. Beschleunigungsmesser nach Anspruch 5, **dadurch gekennzeichnet, dass** sich einer der elastischen Biegearme (38) der Drehverbindung zwischen dem Drehpunkt und dem zweiten Ende (34) des Hebelarms befindet.

8. Beschleunigungsmesser nach einem der vorherigen Ansprüche, **dadurch gekennzeichnet, dass** das starre Stück (32) von einem geschlossenen oder teilweise offenen rechteckigen Rahmen gebildet wird.

9. Beschleunigungsmesser nach einem der vorherigen Ansprüche, **dadurch gekennzeichnet, dass** sich der Anbringungspunkt des Resonators an dem starren Stück an einem Punkt (B) des Stücks befindet, an dem der Winkel, der einerseits von der den Anbringungspunkt mit dem Drehpunkt (M) verbindenden Linie und andererseits von der Längsrichtung des Resonators gebildet wird, nahe 90° liegt.

10. Beschleunigungsmesser nach einem der Ansprüche 1 bis 9, **dadurch gekennzeichnet, dass** der Resonator ein einfacher länglicher resonanter Träger oder eine Baugruppe von zwei mechanisch gekoppelten parallelen resonanten Trägern ist.

11. Beschleunigungsmesser nach einem der Ansprüche 1 bis 10, **dadurch gekennzeichnet, dass** der Resonator ein Ende hat, das an einem Verankerungspunkt (A5) auf dem Substrat angebracht ist.

12. Beschleunigungsmesser nach einem der Ansprüche 1 bis 10, **dadurch gekennzeichnet, dass** er zwei symmetrische Hebelarme (30a, 30b) umfasst, die bei einer Bewegung der seismischen Masse entlang der empfindlichen Achse in entgegengesetzten Richtungen in Drehbewegung versetzt werden, und dadurch, dass der Resonator (20) zwei Enden hat, die jeweils an dem starren Stück (32a, 32b) eines jeweiligen Hebelarms angebracht sind.

13. Beschleunigungsmesser nach Anspruch 12, **dadurch gekennzeichnet, dass** die beiden symmetrischen Hebelarme in der Verlängerung voneinander entlang einem Rand der seismischen Masse angeordnet sind, wobei ihre beiden Enden (34a, 34b) mit der seismischen Masse durch eine jeweilige elastische Verbindung (36a, 36b) nahe der Mitte des Randes der Masse verbunden sind, wobei der Resonator parallel zu den beiden Armen angeordnet ist.

14. Beschleunigungsmesser nach einem der vorherigen Ansprüche, **dadurch gekennzeichnet, dass** er wenigstens zwei symmetrisch mit Bezug auf den Schwerpunkt der seismischen Masse angeordnete Resonatoren (20, 20') und zwei jeweils mit einem jeweiligen Resonator assoziierte Kraftverstärkungsstrukturen (30, 30') symmetrisch mit Bezug auf den Schwerpunkt aufweist.
